Europäisches Patentamt

European Patent Office

Office européen des brevets

(19)

(11) Veröffentlichungsnummer: **0 440 113 B1**

(12) **EUROPÄISCHE PATENTSCHRIFT**

(45) Veröffentlichungstag der Patentschrift: **27.09.95**

(51) Int. Cl.⁶: **C03B 27/044**, C03B 35/18

(21) Anmeldenummer: **91100999.1**

(22) Anmeldetag: **25.01.91**

(54) **Hochkonvektions-Gasstrahldüsenstrecke für über Rollen geführtes, flächenhaftes Gut.**

(30) Priorität: **29.01.90 DE 4002546**

(43) Veröffentlichungstag der Anmeldung:
**07.08.91 Patentblatt 91/32**

(45) Bekanntmachung des Hinweises auf die
Patenterteilung:
**27.09.95 Patentblatt 95/39**

(84) Benannte Vertragsstaaten:
**AT BE CH DE ES FR GB IT LI NL**

(56) Entgegenhaltungen:
EP-A- 0 265 786          DE-A- 2 546 452
DE-C- 2 256 087          DE-C- 3 150 859
GB-A- 2 064 507          US-A- 3 875 766
US-A- 4 363 163

(73) Patentinhaber: **WSP INGENIEURGESELL-
SCHAFT FÜR WÄRMETECHNIK, STRÖMUNGS-
TECHNIK UND PROZESSTECHNIK MIT BE-
SCHRÄNKTER HAFTUNG
Welkenrather Strasse 120
D-52074 Aachen (DE)**

(72) Erfinder: **Kramer, Carl, Prof.Dr.-Ing.
Am Chorusberg 8
W-5100 Aachen (DE)**
Erfinder: **Berns, Klaus, Dipl.-Ing.
Gottfriedstrasse 6
W-5100 Aachen (DE)**

(74) Vertreter: **Schwabe - Sandmair - Marx
Stuntzstrasse 16
D-81677 München (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Rank Xerox (UK) Business Services
(3.10/3.09/3.3.3)

## Beschreibung

Die Erfindung betrifft eine Hochkonvektions-Gasstrahldüsenstrecke für über Rollen geführtes, flächenhaftes Gut, insbesondere zum thermischen Vorspannen von dünnen Flachglasscheiben, mit einem unteren Düsenfeld mit zentrisch und parallel zueinander bzw. zu den Rollen zwischen den Rollen angeordneten, mit Düsenöffnungen versehenen Düsenrippen, und mit einem oberen Düsenfeld, dessen mit Düsenöffnungen versehene Düsenrippen symmetrisch zur vertikalen Achse der gegenüberliegenden, unteren Düsenrippen angeordnet sind.

Durch solche Hochkonvektions-Gasstrahldüsenstrecken kann das über Rollen geführte, flächenhafte Gut, so beispielsweise eine Metallplatte, ein Band aus Metall, Kunststoff, Fasern, Textilien, sowie von Abschnitten derartiger Materialien, erwärmt oder auch abgekühlt werden.

Besonders vorteilhaft ist die Anwendung einer solchen Hochkonvektions-Gasstrahldüsenstrecke als Abkühlstrecke zum thermischen Vorspannen von über Rollen geführten, dünnen Flachglasscheiben, da hier einerseits besonders hohe Wärmeübergänge erzielt werden müssen und andererseits die Glasscheiben nicht von dem Rollengang abgehoben werden dürfen, sich also trotz der die Strömung an der Glasscheibe beeinflussenden Rollen an der Glasunterseite auch bei intensivster Beblasung der Glasscheibe an Glasoberseite und -unterseite nahezu ausgleichende Druckverteilungen einstellen müssen.

Der in einer Abkühlstrecke zum thermischen Vorspannen von Glas zu erzielende Wärmeübergangskoeffizient ist näherungsweise der Glasstärke umgekehrt proportional. Üblicherweise wird der Wärmeübergang durch Beblasen der auf ihre Erweichungstemperatur erwärmten Glasscheibe mit Luft aus einem Düsensystem erreicht, das von einem Ventilator versorgt wird. Bei dieser Art der Wärmeübertragung wächst der Wärmeübergangskoeffizient lediglich etwa mit der 0,7-ten Potenz der Düsenaustrittsgeschwindigkeit. Die dazu erforderliche Strömungsleistung steigt aber mit der dritten Potenz der Düsenaustrittsgeschwindigkeit an. Wird also beispielsweise in einer Abkühlstrecke Glas mit einer Stärke von 3 mm statt mit einer Stärke von 5 mm vorgespannt, so müßte dazu näherungsweise die Düsenaustrittsgeschwindigkeit etwa um das 2,1-fache und die Strömungsleistung um das 9-fache gesteigert werden, um den gleichen Wärmeübergang zu erreichen.

Eine solche Steigerung der Leistung ist nach dem heutigen Stand der Technik der übliche Weg, den Anwendungsbereich einer Abkühlstrecke zum Vorspannen von Glas zu dünnen Glasstärken hin zu erweitern. So werden in industriell betriebenen Abkühlstrecken zum Vorspannen von planen 3 mm dicken Glasscheiben Düsendrücke von 20 000 bis 22 000 pa verwendet.

Durch diese hohen Drücke ergeben sich für dünne Glasscheiben, deren Gewicht linear mit der Dicke und deren Steifigkeit mit der dritten Potenz der Dicke abnimmt, bei der Führung der Glasscheibe über Rollen jedoch weitere Schwierigkeiten. Zur Erzielung einer hinreichenden Planität wäre nämlich erforderlich, daß sowohl der hohe Wärmeübergang als auch die Druckkräfte an der Ober- und an der Unterseite der über Rollen geführten Glasscheiben gleich groß sind. An der Unterseite werden jedoch die Druckbeaufschlagung und der Wärmeübergang durch die Rollen beeinträchtigt. Dem Stand der Technik entsprechend wird dennoch an der Ober- und an der Unterseite das gleiche Düsenfeld für die Beblasung der Glasscheiben verwendet, wobei die erforderliche Differenz im Wärmeübergang durch unterschiedliche Betriebsdrücke für das obere und das untere Düsenfeld ausgeglichen wird. Da die Rollen die Strömung an der Unterseite stauen, muß der Druck an der Unterseite gegenüber dem Druck an der Scheibenoberseite erhöht werden, um den dadurch hervorgerufenen Wärmeübergangsunterschied auszugleichen. Bei dicken Scheiben kann diese Druckdifferenz durch das vergleichsweise hohe Gewicht der Scheibe kompensiert so daß trotz einer Druckdifferenz noch eine ausreichende Führung der Scheibe durch die Rollen gegeben ist. Bei dünnen Scheiben dagegen führen der erforderliche, wesentlich höhere Düsendruck an der Unterseite und die dadurch erzeugte, von unten nach oben gerichtete Druckdifferenzkraft zu einem Abheben der Scheiben vom Rollenherd und damit zu erheblichen Produktionsstörungen, falls überhaupt das Vorspannen von dünnen Glas mit einer solchen Anlage möglich ist.

Als Abhilfe für dieses Problem werden zwischen den oberen DüsenrippenRollenattrappen, z. B. zylindrische Rohre,eingesetz die eine ähnliche Stauwirkung für die auf die Scheibe aufgebrachte Vorspannluft erzeugen, wie sie unterhalb der Scheibe durch die Rollen hervorgerufen wird. Da aber diese Rollenattrappen, anders als die Rollen, nicht die Oberfläche der Scheibe berühren, sondern in einem gewissen Mindestabstand über der Glasoberfläche gehalten werden müssen, unterscheiden sich das Strömungsfeld und folglich auch das Druckfeld, und damit schließlich der Wärmeübergang an der Ober- und an der Unterseite der Glasscheibe doch derart erheblich, daß mit solchen Anlagen ein Scheibensicherheitsglas mit Stärken unterhalb von 3,2 mm nur mit erheblichen Einschränkungen in bezug auf die Anforderungen an die optische Qualität und das Bruchbild hergestellt werden kann.

Aus der deutschen Patentschrift Nr. 31 50 859 (entsprechend der amerikanischen Patentschrift Nr. 4 586 946) ist ein Düsensystem mit der Form einer gewölbten Glasscheibe angepaßten Düsenrippen bekannt, aus denen Gasstrahlen sowohl senkrecht als auch schräg auf die gewölbte Glasscheibe auftreffen. Dabei finden unterhalb und oberhalb der Glasscheiben die gleichen Düsenrippen Verwendung, wobei der oben beschriebene Einfluß der Rollen auf das Strömungsverhalten durch Drosselstäbe kompensiert werden soll, die zwischen den oberen Düsen angeordnet sind. Wie praktische Erfahrungen gezeigt haben, kommt es jedoch bei einer solchen Ausführungsform nach wie vor zu relativ großen Differenzen im Wärmeübergang an der Ober- bzw. Unterseite der Glasscheibe.

Weiterhin geht aus der deutschen Patentschrift Nr. 22 56 087 eine Vorrichtung zum Trocknen einer Warenbahn hervor, deren Düsensystem ausnahmslos schräg auf die Warenbahn auftreffende Strahlen erzeugt; dabei ist die Ausblasrichtung jeder Düsenlochreihe, von der Düsenkastenmitte ausgehend und bezogen auf die Warenbahn, von Lochreihe zu Lochreihe jeweils in einem geringeren Ausblaswinkel angeordnet; außerdem ist der lichte Abstand von der Warenbahn bei jeder Düsenlochreihe - von der Düsenkastenmitte zu den beiden Düsenkastenkanten fortschreitend - jeweils stufenweise größer als bei der vorhergehenden Düsenlochreihe. Diese für die Trocknungstechnik entwickelte Düse ist speziell darauf ausgelegt, daß sich dünne, relativ empfindliche zu trocknende Warenbahnen nicht von der Unterlage abheben können, auf der sie geführt sind. Daher kann auch ein Strahlneigungswinkel von 15° bis 45° in Kauf genommen werden. Mit solchen großen Strahlneigungswinkeln läßt sich jedoch nicht der extrem hohe Wärmeübergang erzeugen, wie er beispielsweise zum Vorspannen von dünnen Sicherheitsglasscheiben benötigt wird.

Der Erfindung liegt die Aufgabe zugrunde eine Hochkonvektions-Gasstrahldüsenstrecke der angegebenen Gattung zu schaffen bei der die oben erwähnten Nachteile nicht auftreten. Insbesondere soll eine Düsenstrecke vorgeschlagen werden, bei der sich auch ohne Verwendung von Rollenattrappen der gleiche Wärmeübergang und die gleiche Druckbeaufschlagung an der Oberseite und an der Unterseite des Gutes ergibt.

Diese Aufgabe wird erfindungsgemäß dadurch gelöst, daß die Düsenböden der oberen Düsenrippen den Querschnitt eines um einen Mittelstreifen erweiterten Buchstabens "M" haben, daß die Breite der Düsenböden der oberen Düsenrippen größer als der horizontale Abstand zwischen den Rollen und kleiner als die Rollenteilung ist, daß der Mittelstreifen sowie die beiden nach oben gekanteten inneren Schenkel des erweiterten M-Querschnitts der Düsenböden mit Düsenöffnungen versehen sind, und daß der kleinste Abstand der oberen Düsenrippen von der Oberseite des Gutes größer als der kleinste Abstand der unteren Düsenrippen von der Unterseite des Gutes ist.

Zweckmäßige Ausführungsformen einer solchen Hochkonvektions-Gasstrahldüsenstrecke werden durch die Merkmale der Unteransprüche definiert.

Die mit der Erfindung erzielten Vorteile beruhen darauf, daß dar angestrebte, hohe Wärmeübergang durch ein im Vergleich mit üblichen Vorspanndüsensystemen wesentlich feineres und filigraneres Düsenfeld bei möglichst gleichmäßiger Beaufschlagung der gesamten Glasoberfläche erreicht wird. Dabei sind die Düsenrippen an der Oberseite des Gutes derart geformt, daß sie den gleichen Wärmeübergang und die gleiche Druckbeaufschlagung auf dem Gut hervorrufen wie die an der Unterseite des Gutes vorgesehenen Düsenrippen, deren Strömungsverhalten und damit schließlich auch der Wärmeübergang durch die zwischen ihnen angeordneten Rollen beeinflußt wird. Dieser gleichmäßige Wärmeübergang an der Ober- und Unterseite des Gutes wird dadurch erreicht daß die Düsenstrahlen alle mit etwa der gleichen Ankunftsgeschwindigkeit auf die Oberfläche des Gutes auftreffen. Hierzu müssen geneigte Strahlen, deren Strahlweg bis zum Auftreffpunkt auf der Oberfäche des Gutes größer ist, mit einem größeren Durchmesser versehen werden. Dieser größere Durchmesser und der damit verbundene größere Volumenstrom machen eine Änderung der Düsenteilung für diese Düsenstrahlen größeren Durchmessers erforderlich.

Die Stauwirkung der Rollen an der Unterseite des Gutes wird durch die Form der Düsenrippen an der Oberseite des Gutes kompensiert, ohne daß hierzu die sonst üblichen Rollenattrappen an der Oberseite des Gutes eingesetzt werden müssen. Dazu tragen die nach unten weisenden, äußeren Schenkel des M-förmigen Querschnitts der Düsenböden der oberen Düsenrippen bei, die den Abströmbereich für das aus den Düsenbohrungen der oberen Düsenrippen austretende Gas zu beiden Seiten der oberen Düsenrippen verengen und dadurch für ein definiertes Auftreffmuster auf der Oberseite des Gutes sorgen.

Bei den erfindungsgemäßen Düsenfeldern treffen die Strahlen aus den mittleren Düsenöffnungsreihen vertikal auf die zu beblasende Fläche auf, während die Strahlen aus den äußeren Düsenöffnungsreihen, deren Bohrungen in nur schwach nach oben geneigten Flächen ausgebildet sind, mit einem relativ großen Winkel auf die zu beblasende Fläche auftreffen. Durch die jeweils gegeneinander versetzte Anordnung der Düsenöffnungen in den äußeren und inneren Düsenöffnungsreihen wird ein klar definiertes Auftreffbild der Düsenstrahlen auf der zu beblasenden Oberfläche erreicht. Dadurch entsteht jeweils zwischen zwei Düsenrippen, also genau oberhalb der Rollen, eine wohldefinierte Stauzone in der sich das auf die Fläche aufgeblasene Behandlungsgas aufgrund des Gleichgewichtes der gegeneinander gerichteten Impulsströme von der Oberfläche ablöst und durch den Spalt zwischen zwei Düsenrippen zurückströmt. Diese geordnete Rückströmung wird also ohne eine Abdeckung mit Lochblech zwischen zwei benachbarten Düsenrippen erreicht, wie es im Prinzip aus der deutschen Patentschrift Nr. 22 56 087 bekannt ist.

Die Erfindung wird im folgenden anhand von Ausführungsbeispielen unter Bezugnahme auf die beiliegenden, schematischen Zeichnungen näher erläutert.

Es zeigen:

Fig. 1    einen Längsschnitt durch einen Ausschnitt einer Abkühlstrecke zum Vorspannen von Glasscheiben mit den oberen und unteren Düsenrippen sowie den Tragrollen für die Glasscheibe;

Fig. 2    eine Abwicklung der Düsenrippen nach Fig. 1, aus der für eine obere und eine untere Düsenrippe die Anordnung und der Durchmesser der Düsenöffnungen zu erkennen sind;

Fig. 3    eine Schemaskizze des Querschnittes einer Gasstrahlkühlstrecke für das thermische Vorspannen von Glasscheiben;

Fig. 4    eine perspektivische Darstellung eines Ausschnittes aus dem oberen und dem unteren Düsenfeld der Gasstrahlkühlstrecke nach Fig. 3;

Fig. 5    ein schematisches Weg/Zeit-Diagramm für den Bewegungsablauf einer Glasscheibe in einer Vorspannstrecke nach den Fig. 3 und 4; und

Fig. 6    eine Kurvendarstellung in der für das Düsensystem nach Fig. 1 der Wärmeübergangskoeffizient $\alpha$ für das obere bzw. untere Düsensystem über der Transportgeschwindigkeit v der Glasscheibe aufgetragen ist.

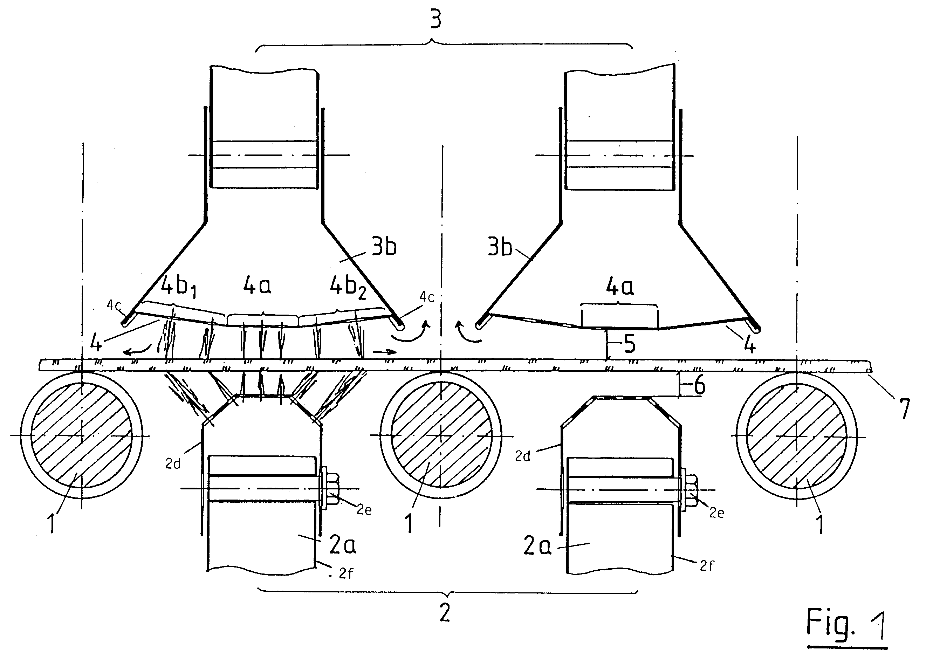

Fig. 1 zeigt im Längsschnitt einen Ausschnitt einer Hochkonvektions-Gasstrahldüsenstrecke als Abkühl- und damit Vorspannstrecke für über Rollen 1 geführte plane Glasscheiben 7. Zwischen den Rollen 1 sind die Düsenrippen 2a des unteren Düsenfeldes 2 angeordnet, d. h. diese Düsenrippen 2a des unteren Düsenfeldes 2 beblasen die freie Unterseite der Glasscheibe 7 zwischen den Rollen 1.

Über der Glasscheibe 7 sind genau über den unteren Düsenrippen 2a die Düsenrippen 3b des oberen Düsenfeldes 3 angeordnet, die die Oberseite der Glasscheibe 7 beblasen. Der Abstand der unteren Düsenrippen 2a von der Glasoberfläche liegt vorzugsweise zwischen 4 mm und 12 mm, während der Abstand der oberen Düsenrippen 3b von der Oberfläche des Glases etwa doppelt so groß sein kann, also im Bereich zwischen 8 mm und 24 mm liegen sollte.

Die Rollen 1 haben den aus der Zeichnung ersichtlichen Kern, in der Regel einen Metallkern oder ein Metallrohr, der mit einem Band aus einem Werkstoff umwickelt ("bandagiert") ist, das der vergleichsweisen hohen Temperatur der Glasscheibe 7 standhält. Als Werkstoff kommt beispielsweise das unter dem Warenzeichen "Kevlar" vertriebene aromatische Polyamid, aber auch andere hochtemperaturfeste Materialien in Betracht, aus denen Streifen oder Bänder hergestellt werden können.

Statt einer solchen Bandage können die massiven Kerne der Rollen 1 auch mit Ringen versehen werden. Hier hat sich insbesondere das Aufziehen von O-Ringen aus den unter der Bezeichnung "Viton" vertriebenen Fluorkautschuken oder die Verwendung von Ringen aus Silikatfasermaterial, beispielsweise Calciumsilikat-Fasermaterial, bewährt.

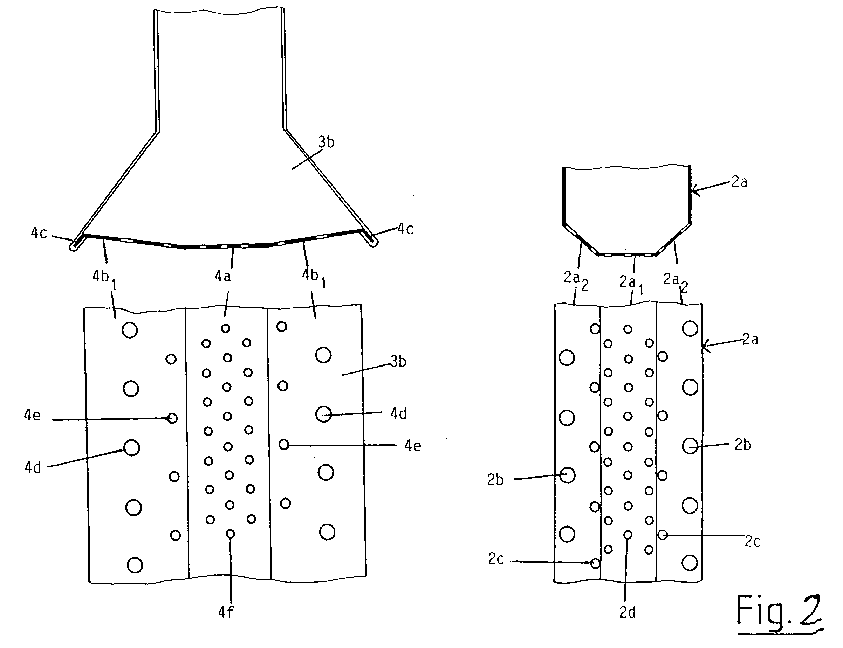

Wie man aus der Darstellung der unteren Düsenrippen 2a in Fig. 1 bzw. im rechten Teil von Fig. 2 erkennt, haben diese die übliche Düsenkappen-Form mit einem parallel zur Transportebene verlaufenden mittleren Bereich $2a_1$, an den sich auf jeder Seite ein abgeschrägter Bereich $2a_2$ anschließt ("Walmdach"). Die Düsenöffnungen sind größenmäßig auf die drei Bereiche verteilt, wobei sich die größten Düsenöffnungen 2b am äußeren Rand der abgeschrägten Bereiche $2a_2$ befinden; wie man in Fig. 2 erkennt, ist eine Reihe von Düsenöffnungen 2b mit relativ großem Durchmesser in diesem Randbereich angeordnet.

Die nächste, nach innen liegende Reihe von Düsenöffnungen 2c hat einen kleineren Durchmesser, während sich im mittleren Bereich $2a_1$ nur Düsenöffnungen 2c mit dem kleinsten Durchmesser der drei verschiedenen Düsenöffnungsgrößen befindet.

Der Düsenboden der oberen Düsenrippen 3b hat in Seitenansicht die Form eines langgestreckten Buchstabens "M" mit einem zusätzlichen Mittelstreifen 4a; ausgehend von diesem Mittelstreifen 4a, der etwa parallel zur Transportebene der Glasscheibe 7 verläuft, erstrecken sich die beiden anschließenden Schenkel $4b_1$ und $4b_2$ des Düsenbodens 4 etwas nach oben bis zum Rand, bei dem der Düsenboden durch nach unten weisende, äußere Schenkel 4c abgeschlossen wird. Diese Schenkel 4c verengen den Abströmbereich für das aus den Düsenbohrungen der oberen Düsenrippen 3b austretende Gas zu beiden Seiten der oberen Düsenrippen 3b, so daß dort das zurückströmende Gas umgelenkt wird, wie durch die Strömungspfeile in Fig. 1 angedeutet ist.

Wie man im linken Teil von Fig. 2 erkennt, befindet sich eine Reihe von Düsenöffnungen 4d mit dem größten Durchmesser aller Düsenöffnungen in den oberen Düsenrippen 3b in den abgeschrägten Bereichen $4b_1$ bzw. $4b_2$, und zwar etwa in der Mitte dieser Bereiche. Eine zweite Reihe von Düsenöffnungen 4e mit kleinerem Durchmesser befindet sich am inneren Rand der abgeschrägten Bereiche $4b_1$ bzw. $4b_2$, während Düsenöffnungen 4f mit dem kleinsten Durchmesser in dem Mittelstreifen 4a ausgebildet sind.

In Fig. 1 sind auch die Strahlrichtungen der aus den verschiedenen Düsenöffnungen austretenden Gasstrahlen dargestellt; man kann erkennen, daß die aus den jeweiligen mittleren Bereichen der Düsenrippen austretenden Gasstrahlen etwa senkrecht auf die Glasscheibe 7 auftreffen, während die von den Randbereichen kommenden Gasstrahlen unterschiedlich stark geneigt sind, nämlich die von den unteren Düsenrippen 2a kommenden Gasstrahlen stärker als die von den seitlichen Schenkeln der oberen Düsenrippen 3b kommenden Gasstrahlen.

Da es bei der Verwendung von Düsen mit dem so erzeugten filigranen Düsenfelder auf eine recht genaue Positionierung der oberen Düsenböden 4 gegenüber den Düsenkappen 2d der unteren Düsenrippen 2a ankommt, sind die Düsenrippen nicht als Schweißkonstruktion aus einem Stück ausgeführt, sondern die Düsenkappen 2d der unteren Düsenrippen 2a sind mit Hilfe der aus Fig. 1 ersichtlichten Verschraubung 2e verschiebbar an den Grundteilen 2f der Düsenrippen 2a befestigt, so daß bei der Montage noch Fertigungsungenauigkeiten ausgeglichen werden können; dies trägt dazu bei, daß die Beaufschlagungsbilder des oberen Düsenfeldes 3 und des unteren Düsenfeldes 2 recht genau zur Deckung gebracht werden können.

Eine Abwicklung derjeniger Flächen der Düsenrippen 2a bzw. 2b, in denen die Düsenöffnungen ausgebildet sind, nämlich der Düsenböden 4 einerseits und der Düsenkappen 2d andererseits, ist aus Fig. 2 ersichtlich. Man erkennt, daß die Durchmesser der Düsenöffnungen 2b, 2c und 2d bzw. 4d, 4e und 4f sowie die Teilung der Reihen von Düsenöffnungen jeweils von der Mitte einer Düsenrippe ausgehend nach außen hin zunehmen. Dabei sind die inneren Reihen von Düsenöffnungen jeweils um eine halbe Teilung gegeneinander versetzt. Die Teilung der äußeren Reihen von Düsenöffnungen wird entsprechend dem durch den größeren Strahlweg bedingten größeren Durchmesser der Düsenöffnungen größer gewählt. Der Abstand zwischen den einzelnen Reihen von Düsenöffnungen ist für den in Fig. 2 links dargestellten Düsenboden 4 der oberen Düsenrippe 3b entsprechend der gegenüber der unteren Düsenrippe 2a unterschiedlichen Form des Düsenbodens größer als bei der unteren Düsenrippe 2a.

Wie man aus Fig. 1 erkennt, ist die Breite des Düsenbodens 4 der oberen Düsenrippen 3b größer als der horizontale Abstand zwischen den Rollen 1 und kleiner als die Rollenteilung, so daß sich die nach unten gerichteten Schenkel $4b_1$ bzw. $4b_2$ über den Rollen 1 befinden, während die zentralen Bereiche $2a_1$ bzw. 4a der jeweiligen Düsenböden einander direkt gegenüberliegen.

Der kleinste Abstand der oberen Düsenrippen 3b von der Oberseite der Glasscheibe, in Fig. 1 durch das Bezugszeichen 5 angedeutet, ist grösser als der kleinste Abstand der unteren Düsenrippen 2e von der Unterseite der Glasscheibe 7, in Fig. 1 durch das Bezugszeichen 6 angedeutet.

Unter Berücksichtigung des Ziels, eine möglichst gleichmäßige Beaufschlagung und damit gleiche Wärmeübergänge an der Ober- und an der Unterseite der Glasscheibe 7 zu erriechen sollten die folgenden Abmessungen für die Düsenrippen 2a bzw. 3b verwendet werden:

Wenn die Gesamtbreite der unteren Düsenrippen 2a mit BU bezeichnet wird, so sollte die Breite BP des im wesentlichen planen Mittelstreifens 4a der oberen Düsenböden 4 innerhalb folgender Grenzen liegen:

$$0,5 \ BU < BP < 0,75 \ BU$$

Der Aufkantwinkel der beiden Schenkel $4b_1$ und $4b_2$ der oberen Düsenböden 4, also der Winkel, unter dem die beiden Schenkel $4b_1$ und $4b_2$ von dem horizontalen Mittelstreifen 4a nach oben verlaufen, sollte im Bereich von 5° bis 10° liegen.

Bezogen auf die Gesamtbreite BU der unteren Düsenrippen 2a sollte die Breite BK der beiden inneren aufgekanteten Schenkel $4b_1$ und $4b_2$ der Düsenböden 4 der oberen Düsenrippen 3b in folgenden Grenzen liegen:

$$0,6 \ BU < BK < 0,9 \ BU.$$

Die Neigung der beiden nach unten gekanteten, äußeren Schenkel 4c der Düsenböden 4 der oberen Düsenrippen 3b gegen die Horizontale sollte zwischen 40° und 50°, insbesondere bei etwa 45°, liegen.

Schließlich sollte bezogen auf die Gesamtbreite BU der unteren Düsenrippen 2a, die Breite BR der beiden nach unten gekanteten äußeren Schenkel der Düsenböden 4 in folgenden Grenzen liegen:

$$0,1 \ BU < BR < 0,25 \ BU.$$

Um ein symmetrisches Auflagemuster zu erreichen, hat der plane Mittelstreifen 4a der oberen Düsenböden 4 eine ungerade Zahl von Reihen von Düsenöffnungen 4f mit vergleichsweise kleinen Lochteilungen; die Reihen von Düsenöffnungen haben einen Abstand von etwa einer Lochteilung voneinander und sind in Längsrichtung um jeweils die halbe Lochteilung gegeneinander versetzt.

Die nach oben geneigten Bereiche $4b_1$ bzw. $4b_2$ der Düsenböden 4 weisen weitere Reihen von Düsenöffnungen mit größerem Durchmesser und mit größerer Lochteilung auf, wobei die Durchmesser und/oder die Lochteilung mit der Ordnungszahl der Reihen von Düsenöffnungen von innen nach außen zunehmen.

Gute Ergebnisse werden erzielt, wenn die Mittel streifen 4a der oberen Düsenböden 4 drei Reihen von Düsenöffnungen und die beiden angrenzenden, nach oben geneigten Bereiche $4b_1$ und $4b_2$ je zwei Reihen von Düsenöffnungen mit der doppelten Lochteilung aufweisen.

Bei einer realisierten Ausführungsform wurden mit folgenden Verhältnissen gute Ergebnisse erzielt: Die Breite BP des Mittelstreifens 4a ist das 0,67-fache der Gesamtbreite BU der unteren Düsenrippen 2a; der Aufkantwinkel der beiden Schenkel $4b_1$ und $4b_2$ beträgt 8°; die Breite BK der beiden Schenkel $4b_1$ und $4b_2$ beträgt das 0,8-fache der Gesamtbreite BU; und die Breite BR entspricht dem 0,14-fachen der Gesamtbreite BU.

Hierbei haben entsprechend der Darstellung nach Fig. 2 die oberen Düsenböden 4 einen Mittel streifen 4a mit drei Reihen von Düsenöffnungen 4f und angrenzende, nach oben geneigte Schenkeln $4b_1$ und $4b_2$ mit je zwei Reihen von Düsenöffnungen 4d und 4e mit jeweils kleiner werdendem Durchmesser und mit der doppelten Lochteilung.

Durch entsprechende Auswahl der Positionierung der Düsenöffnungen, Durchmesser der Düsenöffnungen und Neigungswinkel der Düsenstrahlen kann an der Unterseite der Glasscheibe 7 eine Beaufschlagungsbild erzeugt werden, das zu demjenigen auf der Oberseite der Glasscheibe 7 spiegelbildlich ist.

Bei den aus den Fig. 1 und 2 ersichtlichen Ausführungsformen beträgt die auf die beblasene Fläche einseitig bezogene geometrische Austrittsfläche der Düsenöffnungen etwa 2 % bis etwa 5 %; dabei sollte die Austrittsfläche der Düsenöffnungen für die oberen und die unteren Düsenrippen 3b bzw. 2a gleich sein.

Es hat sich als zweckmäßig herausgestellt, wenn die prozentuale Fläche der Düsenöffnungen in Durchlaufrichtung der Düsenstrecke abnimmt.

Die Teilung von Rollen 1 und Düsenrippen 2a bzw. 3b sollte im Bereich von 60 mm bis 150 mm liegen.

Wie man aus dem rechten Teil von Fig. 1 erkennt, sind die Düsenkappen 2d der unteren Düsenrippen 2a nach Art eines Walmdaches abgeschrägt und mit dem Grundteil 2f verschraubt (2e), wobei sowohl der horizontale Mittelbereich $2a_1$ als

auch die beiden abgeschrägten Randbereiche $2a_2$ Düsenöffnungen aufweisen.

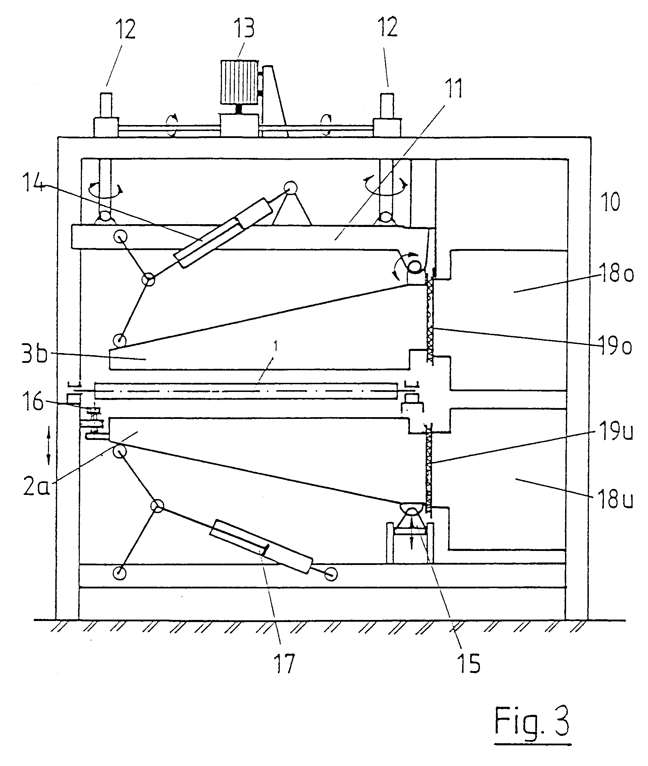

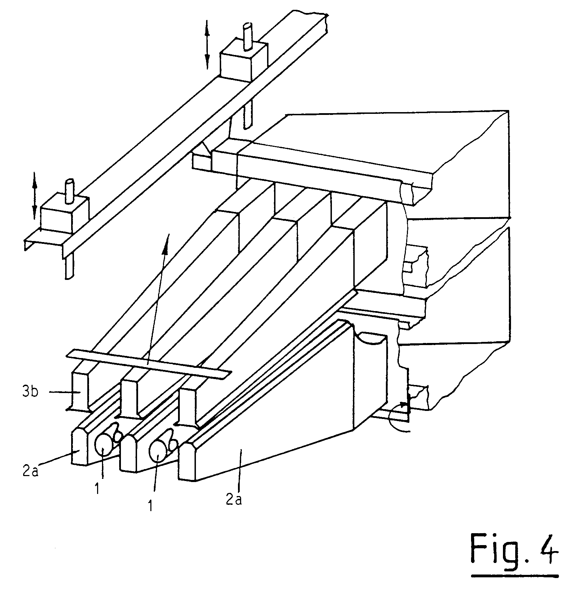

Einen Querschnitt durch eine Hochkonvektions-Gasstrahldüsenstrecke zum thermischen Vorspannen von Flachglasscheiben zeigt Fig. 3. Insbesondere bei größeren Arbeitsbreiten ist es zweckmäßig, die oberen und unteren Düsenrippen 3b bzw. 2a über Luftkanäle 18o und 18u zu versorgen, damit die von der Glasoberfläche erwärmte Luft ohne Behinderung senkrecht von der Glasscheibe nach oben zwischen den jeweiligen Düsenrippen 2a und 3b abströmen kann. Diesen großen Freiraum zur Abströmung der zum Kühlen auf die Glasscheibe 7 aufgeblasenen Luft zeigt auch die perspektivische Darstellung nach Fig. 4, in der die entsprechenden Strömungspfeile eingetragen sind.

Wie man weiter aus Fig. 3 erkennt, sind der obere Düsenherd 19o bzw. seine Düsenrippen 3b an einem Rahmen 11 um eine Drehachse 10 schwenkbar gelagert. Der Rahmen 11 kann in der Höhe mittels Hubelementen 12 fein verstellt werden die an einem stationären Gestell befestigt sind und von Spindeln, die in Fig. 3 durch die Drehpfeile angedeutet sind, mittels eines Elektromotors 13 betätigt werden. Gleichzeitig kann der gesamte obere Düsenherd 3 mittels eines Preßluftzylinders 14 rasch um die Drehachse 10 ausgeschwenkt werden. Dieser doppelt wirkende Preßluftzylinder 14 bewirkt bei normalem Betrieb des Düsenherdes diese Schwenkbewegung. Es kann selbstverständlich auch eine besondere Arretierung vorgesehen werden, die durch die Hubbewegung des Preßluftzylinders 14 ausgelöst wird. Eine solche Arretierung ist insbesondere dann zweckmäßig, wenn die Düsenstrecke mit hohen Drücken betrieben werden muß.

In ähnlicher Weise ist ein Abschwenken des unteren Düsenherdes 19u bzw. Düsenrippen 2a mittels eines Preßluftzylinders 17 um ein Drehgelenk 15 möglich, das zusätzlich höhenverstellbar ausgelegt wie durch den Doppelpfeil in Fig. 3 angedeutet ist. Hier ist jedoch nur eine Feinverstellung der Höhe mittels eines Anschlages 16 und des höhenverstellbaren Drehgelenkes 15 erforderlich, da der Abstand der unteren Düsen von der Unterseite der Glasscheibe 7 lediglich von der Position der unteren Düsenrippen 2a in bezug auf die Rollen 1 abhängt und für alle Glasstärken gleich ist.

Beim Aufwärtsschwenken des oberen Düsenfeldes 3, 19o mittels des Preßluftzylinders 14 und beim Abwärtsschwenken des unteren Düsenfeldes 2, 19u mittels des Preßluftzylinders 17 liegen die Dichtfläche des oberen Düsenfeldes 3, 19o und die Dichtfläche des unteren Düsenfeldes 2, 19u gegenüber den Luftversorgungskästen 18o, 18u frei, so daß eine Höhenverstellung ohne Beeinträchtigung dieser Dichtung möglich ist.

Die aus Fig. 3 ersichtliche Strecke eignet sich zur Automatisierung, wenn entsprechende rechnergesteuerte Motoren und Wegaufnehmer installiert werden.

Der Abstand 5,6 des oberen Düsenfeldes 19o und des unteren Düsenfeldes 19u von der Rollenherdfläche kann auf die beschriebene Weise in Abhängigkeit von den jeweiligen Betriebsbedingungs-Anforderungen eingestellt werden. In der Regel kann man davon ausgehen, daß der Abstand der oberen Düsenrippen 3b von der Oberseite der Glasscheibe 7 etwa doppelt so groß sein sollte wie der Abstand der unteren Düsenrippen 2a von der Unterseite der Glasscheibe.

Dies führt insgesamt zu dem angestrebten Zustand, nämlich daß die Düsendrücke für das obere und das untere Düsenfeld 2, 19u bzw. 3, 19o zumindest näherungsweise gleich sind.

Eine wesentliche Anforderung an thermisch vorgespanntes Einscheiben-Sicherheitsglas stellt neben der zufriedenstellenden Optik, gewährleistet durch gute Planität und eine beschädigungsfreie Oberfläche, auch die Erzielung eines Bruchbildes dar, das den einschlägigen Vorschriften entspricht und einerseits von der Höhe der durch den schroffen Kühlvorgang erzielten Vorspannung und andererseits von der Verteilung dieser Vorspannung abhängt, da sich die Ausbreitung von Bruchlinien nach der Spannungsverteilung im Glas orientiert, siehe deutsche Patentschrift Nr. 28 27 754, wonach die Splitterbildung durch entsprechende Abstufung der Spannung günstig beeinflußt werden kann.

Eine solche Spannungsbeeinflussung ist beispielsweise durch eine Veränderung der Abkühlung möglich wie es schon seit langem für Grobkrümel-Sichtfelder der Windschutzscheiben aus Einscheiben-Sicherheitsglas für Personenkraftwagen durch ein vergröbertes Düsenfeld praktiziert wird.

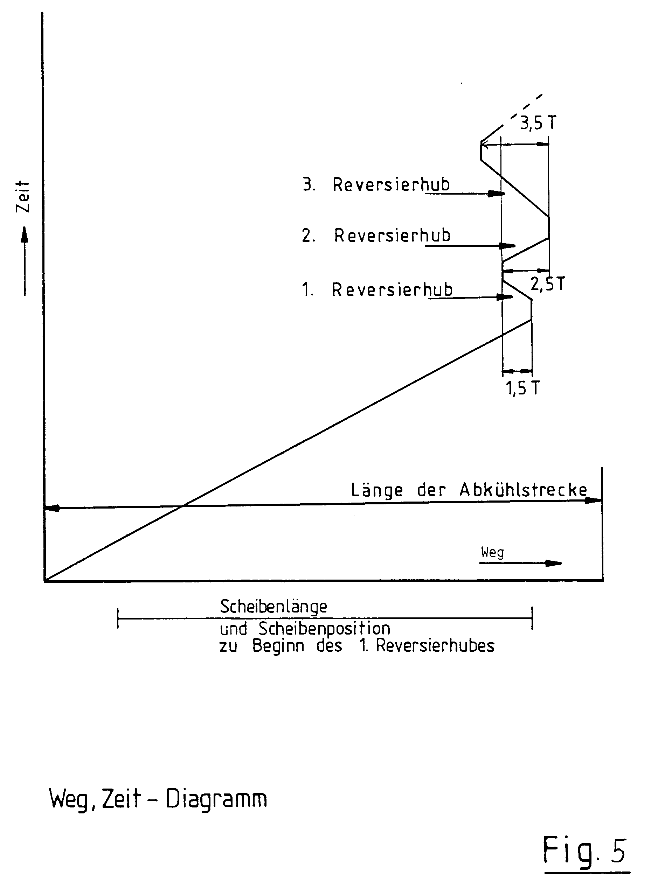

Lokal unterschiedliche Abkühlungen wirken sich aber nur noch dann auf die Spannungsverteilung in der Glasscheibe aus, wenn die Oberfläche der Glasscheibe noch nicht erstarrt ist. Dies kann bei der Vorrichtung nach den Fig. 1 bis 4 mittels einer Scheibenbewegung erreicht werden, die dem in Fig. 5 gezeigten Weg/Zeit-Gesetz folgt. In diesem Diagramm ist auf der Y-Achse die Zeit nämlich der zeitliche Ablauf während des Abkühlens, und auf der X-Achse der Weg, nämlich die Lagenänderung der Vorderkante einer Glasscheibe, aufgetragen, die sich auf der Abkühlstrecke befindet, deren Länge ebenfalls aus Fig. 5 ersichtlich ist.

Unter der X-Achse sind die Scheibenlänge und damit die Position der Vorderkante der Scheibe zu Beginn des ersten Reversierhubes angedeutet.

Wie man aus diesem Diagramm ableiten kann, wird die Scheibe 7 zunächst sehr rasch in die Abkühlstrecke eingefahren, bis ihre Vorderkante die angedeutete Lage erreicht hat. In dieser Lage wird die Scheibe eine kurze Zeit gehalten, bevor der erste Reversierhub beginnt, bei dem die Scheibe entgegen der ursprünglichen Bewegungsrichtung etwas zurückverschoben wird. Dieser Reversierhub beträgt ein Vielfaches der Düsenteilung T, wodurch sich die Vorspannung im Glas entsprechend der Düsen- oder Rollenteilung T ändert.

Bei dem aus Fig. 5 ersichtlichen Bewegungsablauf beträgt der Reversierhub das 1,5-fache der Düsenteilung T.

Die Glasscheibe bleibt dann für kurze Zeit in dieser Lage, bevor der zweite Reversierhub in entgegengesetzter Richtung beginnt, und zwar über die Strecke 2,5 T. Die Scheibe bleibt dann wieder für kurze Zeit in dieser neuen Lage, bevor der dritte Reversierhub mit der Länge 3,5 T gegen die Einfahrrichtung beginnt. Hieran können sich, falls erforderlich, noch weitere Reversierhübe anschließen.

Die Länge der Spieße läßt sich dadurch verkürzen, daß die beim Reversieren erzeugte streifenförmig unterschiedliche Abkühlung verfeinert wird, indem man das Reversieren mit Hüben vom ungeraden Vielfachen der halben Teilung vornimmt. Dies kann auch mit der aus Fig. 5 ersichtlichen Änderung der Größe des Reversierweges von Hub zu Hub kombiniert werden.

Zusätzlich zu den bisher beschriebenen Maßnahmen kann der Wärmeübergang, z. B. durch Verringern der Düsenfläche, in Durchlaufrichtung der Vorspannstrecke verringert oder synchron mit dem Einlaufen der Scheibe der Düsendruck insgesamt gemindert werden.

Diese Reduzierung des Düsendruckes läßt sich beispielsweise durch Reduzieren der Drehzahl des bzw. der die Düsenfelder versorgenden Ventilators/Ventilatoren (nicht dargestellt) erreichen. Als Alternative hierzu kann die Strömung beim Eintritt in die Düsenrippen individuell gedrosselt und dadurch der Düsendruck verringert werden.

Unter Ausnutzung der gleichen Verstellmöglichkeiten kann der Gasdruck sowohl in den oberen als auch unteren Düsenrippen der beiden Düsenfelder in Durchlaufrichtung der Glasscheibe von Düsenrippe zu Düsenrippe reduziert werden.

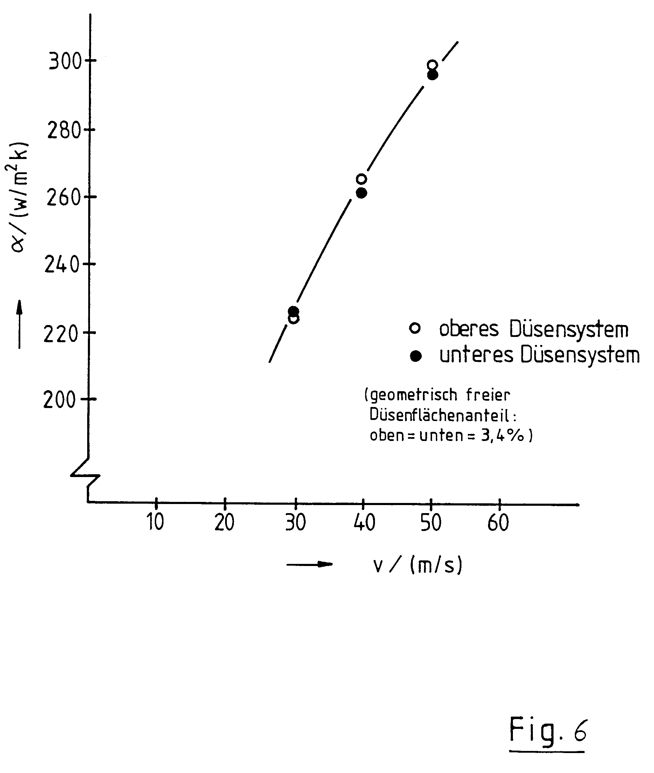

Fig. 6 zeigt schließlich in einer graphischen Darstellung die Abhängigkeit des Wärmeübergangskoeffizienten $\alpha$ für das obere Düsensystem und das untere Düsensystem in Abhängigkeit von der Geschwindigkeit v der durchlaufenden Glasscheiben 7. In beiden Fällen also oben und, beträgt der geometrisch freie Düsenflächenanteil 3,4 %.

Es läßt sich erkennen, daß die Meßpunkte für den Wärmeübergangskoeffizienten $\alpha$ beim oberen und beim unteren Düsensystem praktisch identisch sind, d. h. an der Ober- und Unterseite der Glasscheibe gibt es keinen meßbaren Unterschied. Ein solcher Verlauf läßt sich mit den bisher üblichen Techniken nur mit extremem Aufwand realisieren.

**Patentansprüche**

1. Hochkonvektions-Gasstrahldüsenstrecke für ein über Rollen geführtes, flächenhaftes Gut, insbesondere zum thermischen Vorspannen von dünnen Flachglasscheiben,
   a) mit einem unteren Düsenfeld (2) mit zentrisch und parallel zwischen den Rollen (1) angeordneten, mit Düsenöffnungen versehenen Düsenrippen (2a), und
   b) mit einem oberen Düsenfeld (3), dessen mit Düsenöffnungen versehene Düsenrippen (3b) symmtrisch zur vertikalen Achse einer zugehörigen, gegenüberliegenden unteren Düsenrippe (2a) angeordnet sind,
   c) wobei die Gasstrahlen aus einigen Düsenöffnungen senkrecht und die Gasstrahlen aus anderen Düsenöffnungen schräg auf die Oberfläche des Gutes auftreffen,
   **gekennzeichnet** durch die folgenden Merkmale:
   d) die Düsenböden (4) der oberen Düsenrippen (3a) haben den Querschnitt eines um einen Mittel streifen (4a) erweiterten Buchstabens "M";
   e) die Breite des Düsenbodens (4) der oberen Düsenripper (3b) ist größer als der horizontale Abstand zwischen den Rollen (1) und kleiner als die Rollenteilung (T);
   f) der Mittelstreifen (4a) sowie die beiden nach oben gekanteten inneren Schenkel ($4b_1$, $4b_2$) des Düsenbodens (4) der oberen Düsenrippen (3b) sind mit Düsenöffnungen (4d, 4e, 4f) versehen; und
   g) der kleinste Abstand (5) der oberen Düsenrippen (3b) von der Oberseite des Gutes (7) ist größer als der kleinste Abstand (6) der unteren Düsenrippen (2a) von der Unterseite des Gutes (7).

2. Hochkonvektions-Gasstrahldüsenstrecke nach Anspruch 1, gekennzeichnet durch die folgenden Abmessungsbereiche für die Düsenböden (4) der oberen Düsenrippen (3b):
   - bei einer Gesamtbreite BU der unteren Düsenrippen (2a) liegt die Breite BP des im wesentlichen planen Mittelstreifens (4a) in folgendem Bereich:

   $$0,5 \ BU < BP < 0,75 \ BU;$$

   - der Aufkantwinkel der beiden inneren Schenkel ($4b_1$, $4b_2$) des Düsenbodens (4) liegt zwischen 5° und 10°;
   - die Breite BK der beiden inneren, aufgekanteten Schenkel ($4b_1$, $4b_2$) des oberen

Düsenbodens (4) liegt in Bezug auf die Gesamtbreite BU der unteren Düsenrippen (82a) in folgendem Bereich:

   $$0,6 \ BU < BK < 0,9 \ BU;$$

   - die Neigung der beiden nach unten gekanteten, äußeren Schenkel (4c) der oberen Düsenböden (4) gegen die Horizontale liegt im Bereich von 40° bis 50°, insbesondere bei etwa 45°; und
   - die Breite BR der beiden nach unten gekanteten äußeren Schenkel (4c) der oberen Düsenböden (4) liegt, bezoger, auf die Gesamtbreite BU der unteren Düsenrippen (2a), im folgenden Bereich:

   $$0,1 \ BU < BR < 0,25 \ BU.$$

3. Hochkonvektions-Gasstrahldüsenstrecke nach einem der Ansprüche 1 oder 2, dadurch gekennzeichnet, daß der plane Mittelstreifen (4a) der oberen Düsenböden (4) eine ungerade Anzahl von Reihen von Düsenöffnungen (4f) mit vergleichsweise kleiner Lochteilung und vergleichsweise kleinem Durchmesser aufweist, daß die Reihen dieser Düsenöffnungen (4f) den Abstand etwa einer Lochteilung voneinander haben und in Längsrichtung um jeweils die halbe Lochteilung gegeneinander versetzt sind, daß die aufwärts gekanteten inneren Schenkel ($4b_1$, $4b_2$) der oberen Düsenböden (4) weitere Reihen von Düsenöffnungen (4d, 4e) mit größerem Öffnungsdurchmeser und mit größerer Lochteilung aufweisen, und daß die Durchmesser und/oder die Lochteilung der Düsenöffnungen (4d, 4e, 4f) mit der Ordnungszahl der Reihen von Düsenöffnungen (4d, 4e, 4f) von innen nach außen zunehmen.

4. Hochkonvektions-Gasstrahldüsenstrecke nach einem der Ansprüche 1 bis 3, dadurch gekennzeichnet, daß die Düsenböden (4) der oberen Düsenrippen (3b) im Mittelstreifen (4a) drei Reihen von Düsenöffnungen (4f) und die angrenzenden beiden nach oben gekanteten Schenkeln ($4b_1$, $4b_2$) je zwei Reihen von Düsenöffnungen (4d, 4e) mit der doppelten Lochteilung aufweisen.

5. Hochkonvektions-Gasstrahldüsenstrecke nach mindestens einem der Ansprüche 1 bis 4, dadurch gekennzeichnet, daß die Düsenöffnungen in den oberen und unteren Düsenrippen (2a, 3b) durch Wahl ihrer Position, ihrer Durchmesser und der Neigungswinkel der von ihnen abgegebenen Düsenstrahlen auf einer Gutseite ein Beaufschlagungsbild erzeugen, das zu dem Beaufschlagungsbild auf der gegenüberliegenden Gutseite spiegelbildlich ist.

6. Hochkonvektions-Gasstrahldüsenstrecke nach mindestens einem der Ansprüche 1 bis 5, dadurch gekennzeichnet, daß die auf die beblasene Fläche des Gutes (7) einseitig bezogene geometrische Düsenaustrittsfläche etwa 2 % bis etwa 5 % beträgt, und daß die Düsenaustrittsfläche für die oberen und unteren Düsenrippen (2a, 3b) gleich ist.

7. Hochkonvektions-Gasstrahldüsenstrecke nach mindestens einem der Ansprüche 1 bis 6, dadurch gekennzeichnet, daß die prozentuale Fläche der Düsenöffnungen in Durchlaufrichtung der Düsenstrecke abnimmt.

8. Hochkonvektions-Gasstrahldüsenstrecke nach mindestens einem der Ansprüche 1 bis 7, dadurch gekennzeichnet, daß die Teilung von Rollen (1) und Düsenrippen (2a, 3b) im Bereich von etwa 60 mm bis etwa 150 mm liegt.

9. Hochkonvektions-Gasstrahldüsenstrecke nach einem der Ansprüche 1 bis 8, dadurch gekennzeichnet, daß die unteren Düsenrippen (2a) im Querschnitt nach Art eines Walmdaches abgeschrägt sind, und daß sowohl die abgeschrägten Flächen ($2a_2$) als auch die horizontale Fläche ($2a_1$) Düsenöffnungen (2b, 2c, 2d) aufweisen.

10. Hochkonvektions-Gasstrahldüsenstrecke nach mindestens einem der Ansprüche 1 bis 9, dadurch gekennzeichnet, daß der Abstand (5) des oberen Düsenfeldes (3) von der Rollenherdfläche und der Abstand (6) des unteren Düsenfeldes (2) von der Rollenherdfläche verstellbar sind.

11. Hochkonvektions-Gasstrahldüsenstrecke nach mindestens einem der Ansprüche 1 bis 10, dadurch gekennzeichnet, daß der Abstand (5) des oberen Düsenfeldes (3) von dem Gut (7) etwa doppelt so groß wie der Abstand (6) des unteren Düsenfeldes (2) von dem Gut (7) ist.

12. Hochkonvektions-Gasstrahldüsenstrecke nach mindestens einem der Ansprüche 1 bis 11, dadurch gekennzeichnet, daß die Düsendrücke für das obere Düsenfeld (3) und das untere Düsenfeld (2) näherungsweise gleich sind.

13. Hochkonvektions-Gasstrahldüsenstrecke nach mindestens einem der Ansprüche 1 bis 12, dadurch gekennzeichnet, daß bei Verwendung dieser Düsenstrecke zum thermischen Vorspannen von Glasscheiben (7) der Düsendruck beim oder nach dem Einlaufen der Glasscheiben reduziert wird.

14. Hochkonvektions-Gasstrahldüsenstrecke nach Anspruch 13, dadurch gekennzeichnet, daß der Düsendruck durch Verringerung der Drehzahl des bzw. der die Düsenfelder (2, 3) versorgenden Ventilatoren reduziert wird.

15. Hochkonvektions-Gasstrahldüsenstrecke nach mindestens einem der Ansprüche 1 bis 14, dadurch gekennzeichnet, daß der Gasdruck sowohl in den oberen Düsenrippen (3b) als auch in den unteren Düsenrippen (2a) in Durchlaufrichtung des flächenhaften Gutes von Düsenrippe zu Düsenrippe abnimmt.

16. Hochkonvektions-Gasstrahldüsenstrecke nach Anspruch 15, dadurch gekennzeichnet, daß die Strömung im Eintritt in die Düsenrippen (2a, 3b) individuell gedrosselt wird.

17. Hochkonvektions-Gasstrahldüsenstrecke nach mindestens einem der Ansprüche 1 bis 16, dadurch gekennzeichnet, daß bei Verwendung der Düsenstrecke zum thermischen Vorspannen von Glasscheiben (7) jede Glasscheibe (7) nach Einfahren in die Abkühlstrecke angehalten und anschließend mindestens einfach mit einem Hub reversiert wird, der ein Vielfaches der halben Rollenteilung (T) ausmacht.

18. Hochkonvektions-Gasstrahldüsenstrecke nach Anspruch 17, dadurch gekennzeichnet, daß der Reversierhub für zumindest eine Reversierung unterschiedlich ist.

19. Hochkonvektions-Gasstrahldüsenstrecke nach mindestens einem der Ansprüche 1 bis 18 zum Vorspannen von dünnen Glasschieben, dadurch gekennzeichnet, daß die oberen Düsenrippen (3b) insgesamt um einen Drehpunkt (10) schwenkbar an einem Rahmen (11) gelagert sind, der mittels Hubspindeln (12) und einem Hubspindelantrieb (13) vertikal verstellbar ist, daß mittels eines pneumatischen Zylinders (14) das gesamte obere Düsenfeld (3) um den Drehpunkt (10) nach oben schwenkbar ist, daß das untere Düsenfeld (2) mittels eines pneumatischen Zylinders (17) um einen in seiner Höhe verstellbaren Drehpunkt (15) schwenkbar und mittels des gleichen Zylinders (17) gegen einen höhenverstellbaren Anschlag (16) drückbar ist.

20. Hochkonvektions-Gasstrahldüsenstrecke nach Anspruch 19, dadurch gekennzeichnet, daß Wegaufnehmer zur Ermittlung des Höhenverstellweges vorgesehen sind, und daß die Höhenverstellung über eine rechnergesteuerte Regelung motorisch erfolgt.

21. Hochkonvektions-Gasstrahldüsenstrecke nach mindestens einem der Ansprüche 1 bis 20 zum Vorspannen von Glasscheiben, dadurch gekennzeichnet, daß die Rollen (1) für die Führung der Glasscheiben (7) an ihrem gesamten Umfang mit Auflagen für die Glasscheiben (7) versehen sind, die insgesamt nur den kleineren Teil der jeweiligen Rollenmantelfläche ausmachen.

22. Hochkonvektions-Gasstrahldüsenstrecke nach Anspruch 21, dadurch gekennzeichnet, daß die Auflagen durch O-Ringe aus einem Fluorkautschuk gebildet werden.

23. Hochkonvektions-Gasstrahldüsenstrecke nach Anspruch 21, dadurch gekennzeichnet, daß die Auflagen aus einem Silikatfasermaterial, insbesondere Calciumsilikat-Fasermaterial, in Verbindung mit geeigneten Bindemitteln bestehen.

**Claims**

1. A high-convection gas jet section for roller-guided sheet-like material, more particularly for tempering thin flat glass sheets, comprising
   a) a lower nozzle array (2) having nozzle ribs (2a) arranged centrally and parallelly between the rollers (1) and provided with nozzle orifices, and
   b) an upper nozzle array (3), the nozzle ribs (3b) of which being provided with nozzle orifices and arranged symmetrically to the vertical axis of an associated, opposite lower nozzle rib (2a),
   c) the gas jets from some nozzle orifices impinging perpendicularly on the surface of said material and the gas jets from other nozzle orifices impinging obliquely on said surface,
   characterized by the following features:
   d) the nozzle trays (4) of said upper nozzle ribs (3a) have the cross section of a letter "M" extended by a center strip (4a);
   e) the width of said nozzle tray (4) of said upper nozzle ribs (3b) is greater than the horizontal distance between said rollers (1) and smaller than the roller pitch (T);
   f) the center strip (4a) and the two upswept inner legs ($4b_1$, $4b_2$) of said nozzle tray (4) of said upper nozzle ribs (3b) are provided with nozzle orifices (4d, 4e, 4f), and
   g) the smallest distance (5) of said upper nozzle ribs (3b) from the upper side of said material (7) is greater than the smallest distance (6) of said lower nozzle ribs (2a) from the underside of said material (7).

2. The high-convection gas jet section as set forth in claim 1, characterized by the following dimensional ranges for said nozzle trays (4) of said upper nozzle ribs (3b):
   - for a total width BU of said lower nozzle ribs (2a) the width BP of the substantially planar middle strip (4a) is in the following range:

   0.5 BU < BP < 0.75 BU;

   - the upsweep angle of the two inner legs ($4b_1$, $4b_2$) of said nozzle tray (4) is in the range from 5° to 10°;
   - with respect to the total width BU of said lower nozzle ribs (82a) the width BK of said two inner upswept legs ($4b_1$, $4b_2$) of said upper nozzle tray (4) is in the following range:

   0.6 BU < BK < 0.9 BU;

   - the inclination of the two downswept outer legs (4c) of said upper nozzle trays (4) to the horizontal is in the range of 40° to 50°, more particularly roughly 45°; and
   - with respect to the total width BU of said lower ribs of nozzles (2a) the width BR of said two downswept outer legs (4c) of said upper nozzle trays (4) is in the following range:

   0.1 BU < BR < 0.25 BU.

3. The high-convection gas jet section as set forth in claim 1 or claim 2, characterized in that the plane middle strip (4a) of said upper nozzle trays (4) has an odd number of rows of nozzle orifices (4f) with a relatively small center-spacing or hole pitch and a relatively small diameter, that the rows of said nozzle orifices (4f) are spaced away from each other by roughly a single center-spacing or hole pitch and, in the longitudinal direction, are mutually offset by half a center-spacing or hole pitch in each case, that said upswept inner legs ($4b_1$, $4b_2$) of said upper nozzle trays (4) feature further rows of nozzle orifices (4d, 4e) having a greater orifice diameter and a greater center-spacing or hole pitch, and that the diameters and/or the center-spacing or hole pitch of said nozzle orifices (4d, 4e, 4f) increase with the ordinal number of rows of said nozzle orifices (4d, 4e, 4f) from the inside to the outside.

4. The high-convection gas jet section as set forth in any of the claims 1 to 3, characterized in that the nozzle trays (4) of said upper nozzle ribs (3b) feature three rows of nozzle orifices (4f) in the center strip (4a) and the two adjoining upwardly inclined legs ($4b_1$, $4b_2$) each have two rows of nozzle orifices (4d, 4e) on twice the center-spacing or hole pitch.

5. The high-convection gas jet section as set forth in any of the claims 1 to 4, characterized in that said nozzle orifices in said upper and lower nozzle ribs (2a, 3b) generate by selection of their position, their diameters and their angles of inclination of their nozzle jets an impingement pattern on one side of the material which is mirror-inverse to that on the other side of the material.

6. The high-convection gas jet section as set forth in any of the claims 1 to 5, characterized in that the geometric nozzle exit area relative to the jetted area on one side of said material (7) is roughly 2% to roughly 5%, and that the nozzle exit area for the upper and lower nozzle ribs (2a, 3b) is equal.

7. The high-convection gas jet section as set forth in any of the claims 1 to 6, characterized in that the percentage area of the nozzle orifices decreases in the conveying direction of the jet section.

8. The high-convection gas jet section as set forth in any of the claims 1 to 7, characterized in that the pitch of said rollers (1) and of said nozzle ribs (2a, 3b) lies in the range of roughly 60 mm to roughly 150 mm.

9. The high-convection gas jet section as set forth in any of the claims 1 to 8, characterized in that said lower nozzle ribs (2a) are inclined in cross section in the manner of a hipped roof, and that both the two inclined edge regions ($2a_2$) and the horizontal region ($2a_1$) feature nozzle orifices (2b, 2c, 2d).

10. The high-convection gas jet section as set forth in any of the claims 1 to 9, characterized in that the distance (5) of said upper nozzle array (3) from the surface of the roller group and the distance (6) of said lower nozzle array (2) from the surface of said roller group are adjustable.

11. The high-convection gas jet section as set forth in any of the claims 1 to 10, characterized in that the distance (5) of said upper nozzle array (3) from the material (7) is roughly twice that of distance (6) of said lower nozzle array (2) from the material (7).

12. The high-convection gas jet section as set forth in any of the claims 1 to 11, characterized in that the jetting pressures for said upper nozzle array (3) and for said lower nozzle array (2) are approximately equal.

13. The high-convection gas jet section as set forth in any of the claims 1 to 12, characterized in that when said jet section is employed for tempering glass sheets (7) the jetting pressure is reduced on or following entry of the glass sheets.

14. The high-convection gas jet section as set forth in claim 13, characterized in that said jetting pressure is reduced by reducing the speed of rotation of the fans supplying said nozzle arrays (2, 3).

15. The high-convection gas jet section as set forth in any of the claims 1 to 14, characterized in that the gas pressure diminishes in both said upper nozzle ribs (3b) and said lower nozzle ribs (2b) from nozzle rib to nozzle rib in the conveyance direction of the sheet-like material.

16. The high-convection gas jet section as set forth in claim 15, characterized in that the flow at the inlet in the nozzle ribs (2a, 3b) is individually throttled.

17. The high-convection gas jet section as set forth in any of the claims 1 to 16, characterized in that when said jet section is employed for tempering glass sheets (7) each sheet (7) is halted following entry in the cooling section and subsequently reversed at least once by a stroke which is a multiple of half the roller pitch (T).

18. The high-convection gas jet section as set forth in claim 17, characterized in that said reversing stroke differs for at least one reversal.

19. The high-convection gas jet section as set forth in any of the claims 1 to 18 for tempering thin sheets of glass, characterized in that the upper nozzle ribs (3b) as a whole are pivotally mounted about a pivot axis (10) on a frame (11) which is vertically adjustable by means of lifting spindles (12) and a lifting spindle drive (13), that the entire upper nozzle array (3) is pivotable upwards about said pivot axis (10) by means of a pneumatic cylinder (14), and that said lower nozzle array (2) is pivotable about an height-adjustable pivot axis (15) by means of a pneumatic cylinder (17) and is pressable against a height-adjustable stop (16) by means of said cylinder (17).

20. The high-convection gas jet section as set forth in claim 19, characterized in that displacement pickups are provided for sensing the height displacement, and that said height displacement is motor-powered via a computer-aided feedback control system.

21. The high-convection gas jet section as set forth in any of the claims 1 to 20 for tempering sheets of glass, characterized in that said rollers (1) for guiding said glass sheets (7) are provided fully circumferentially with supports for said glass sheets (7), these supports taking up merely a minor part of the respective roller surface area.

22. The high-convection gas jet section as set forth in claim 21, characterized in that said supports are formed by O-rings of a fluorene caoutchouc.

23. The high-convection gas jet section as set forth in claim 21, characterized in that said supports consist of silicate fibrous material, especially calcium silicate fibrous material, in conjunction with suitable binders.

**Revendications**

1. Parcours à tuyères de projection de gaz sous forte convection pour un produit plat transporté sur des rouleaux, en particulier pour la précontrainte thermique de vitres minces et plates,

   a) comportant un champ inférieur de tuyère (2) avec des rampes de tuyères (2a) dotées d'ouvertures de tuyères et disposées parallèlement et centralement entre les rouleaux (1), et

   b) avec un champ supérieur de tuyères (3) dont les rampes de tuyères (3b) dotées d'ouvertures de tuyères sont disposées symétriquement par rapport à l'axe vertical d'une rampe inférieure de tuyères (2a) associées et opposées,

   c) tandis que les jets de gaz sortant de certaines ouvertures de tuyères viennent frapper perpendiculairement la surface du produit, les jets de gaz sortant d'autres ouvertures de tuyères venant frapper cette surface obliquement,

   caractérisé par les caractéristiques suivantes:

   d) les fonds à tuyères (4) des rampes supérieures de tuyères (3a) présentent une section transversale en forme de lettre "M" élargie par une bande médiane (4a);

   e) la largeur du fond à tuyères (4) des rampes supérieures de tuyères (3b) est plus grande que l'écart horizontal entre les rouleaux (1) et est plus petite que l'entr'axe (T) des rouleaux;

   f) la bande médiane (4a) ainsi que les deux ailes intérieures repliées vers le haut (4b$_1$, 4b$_2$) du fond à tuyères (4) des rampes supérieures de tuyères (3b) sont dotées d'ouvertures de tuyères (4d, 4e, 4f); et

   g) le plus petit écart (5) entre les rampes supérieures de tuyères (3b) et la face supérieure du produit (7) est plus grand que la plus petite distance (6) entre les rampes inférieures de tuyères (2a) et la face inférieure du produit (7).

2. Parcours à tuyères de projection de gaz sous forte convection selon la revendication 1, caractérisé par les plages de dimensions ci-dessous pour les fonds à tuyères (4) des rampes supérieures de tuyères (3b):

   - pour une largeur totale BU des rampes inférieures de tuyères (2a), la largeur BP de la bande médiane (4a) essentiellement plane est située dans la plage suivante:

   $$0,5\ BU < BP < 0,75\ BU$$

   - l'angle de pliage des deux ailes intérieures (4b$_1$, 4b$_2$) du fond à tuyères (4) vaut entre 5° et 10°;

   - la largeur BK des deux ailes intérieures repliées (4b$_1$, 4b$_2$) du fond supérieur à tuyères (4) par rapport à la largeur totale BU des rampes inférieures de tuyères (2a) est située dans la plage suivante:

   $$0,6\ BU < BK < 0,9\ BU$$

   - l'inclinaison des deux ailes extérieures (4c) repliées vers le bas des fonds supérieurs à tuyères (4) par rapport à l'horizontale est située dans la plage de 40° à 50°, et vaut en particulier environ 45°; et

- par rapport à la largeur totale Bu des rampes inférieures de tuyères (2a), la largeur BR des deux ailes extérieures (4c), repliées vers le bas, des fonds supérieurs à tuyères (4) est située dans la plage suivante:

  0,1 BU < BR < 0,25 BU.

3. Parcours à tuyères de projection de gaz sous forte convection selon l'une des revendications 1 ou 2, caractérisé en ce que la bande médiane plane (4a) des fonds supérieurs à tuyères (4) présente un nombre impair de rangées d'ouvertures de tuyères (4f) à un entr'axe des trous relativement plus petit et un diamètre relativement plus petit, en ce que les rangées de ces ouvertures de tuyères (4f) présentent l'une par rapport à l'autre une distance valant sensiblement un entr'axe des trous et sont chacune décalées l'une par rapport à l'autre dans la direction longitudinale d'un demi entr'axe des trous, en ce que les ailes intérieures repliées vers le haut ($4b_1$, $4b_2$) des fonds supérieurs à tuyères (4) présentent d'autres rangées d'ouvertures de tuyères (4d, 4e) d'un plus grand diamètre d'ouverture et d'un plus grand entr'axe des trous, et en ce que le diamètre et/ou l'entr'axe des trous des ouvertures de tuyères (4d, 4e, 4f) augmentent de l'intérieur vers l'extérieur dans l'ordre des rangées d'ouvertures de tuyères (4d, 4e, 4f).

4. Parcours à tuyères de projection de gaz sous forte convection selon l'une des revendications 1 à 3, caractérisé en ce que les fonds de tuyères (4) des rampes supérieures de tuyères (3b) présentent dans la bande médiane (4a) trois rangées d'ouvertures de tuyères (4f), et en ce que les deux ailes repliées vers le haut ($4b_1$, $4b_2$) qui s'y raccordent présentent chacune deux rangées d'ouvertures de tuyères (4d, 4e) avec un entr'axe des trous double.

5. Parcours à tuyères de projection de gaz sous forte convection selon au moins l'une des revendications 1 à 4, caractérisé en ce que, par la sélection de leur position, de leur diamètre et de l'angle d'inclinaison des jets de tuyères émis par elles, les ouvertures de tuyères des rampes supérieures et des rampes inférieures de tuyères (2a, 3b) créent un motif d'attaque sur une face d'un produit qui est l'image spéculaire du motif d'attaque sur la face opposée du produit.

6. Parcours à tuyères de projection de gaz sous forte convection selon l'une des revendications 1 à 5, caractérisé en ce que la surface géométrique de sortie des tuyères vaut environ 2% à environ 5% de la surface balayée d'un côté du produit (7), et en ce que la surface de sortie des tuyères est identique pour les rampes supérieures et les rampes inférieures de tuyères (2a, 3b).

7. Parcours à tuyères de projection de gaz sous forte convection selon l'une des revendications 1 à 6, caractérisé en ce qu'en pourcentage, la surface des ouvertures de tuyères diminue dans la direction de la traversée du parcours à tuyères.

8. Parcours à tuyères de projection de gaz sous forte convection selon au moins l'une des revendications 1 à 7, caractérisé en ce que l'entr'axe des rouleaux (1) et rampes de tuyères (2a, 3b) est situé dans la plage d'environ 60 mm à environ 150 mm.

9. Parcours à tuyères de projection de gaz sous forte convection selon l'une des revendications 1 à 8, caractérisé en ce que les rampes inférieures de tuyères (2a) sont repliées en coupe à la manière d'un toit en croupe, et en ce que tant les surfaces inclinées vers le bas ($2a_2$) que les surfaces horizontales ($2a_1$) présentent des ouvertures de tuyères (2b, 2c, 2d).

10. Parcours à tuyères de projection de gaz sous forte convection selon l'une des revendications 1 à 9, caractérisé en ce que la distance (5) entre le champ supérieur de tuyères (3) et la surface du champ de rouleaux, ainsi que la distance (6) entre le champ inférieur de tuyères (2) et la surface du champ de rouleaux, sont ajustables.

11. Parcours à tuyères de projection de gaz sous forte convection selon l'une des revendications 1 à 10, caractérisé en ce que la distance (5) entre le champ supérieur de tuyères (3) et le produit (7) vaut sensiblement le double de la distance (6) entre le champ inférieur de tuyères (2) et le produit (7).

12. Parcours à tuyères de projection de gaz sous forte convection selon au moins l'une des revendications 1 à 11, caractérisé en ce que la pression de tuyères est approximativement identique pour le champ supérieur de tuyères (3) et le champ inférieur de tuyères (2).

**13.** Parcours à tuyères de projection de gaz sous forte convection selon l'une au moins des revendications 1 à 12, caractérisé en ce que lors de l'utilisation de ce parcours à tuyères pour la précontrainte thermique de vitre (7), la pression de tuyères est réduite lors de l'introduction de la vitre ou après celle-ci.

**14.** Parcours à tuyères de projection de gaz sous forte convection selon la revendication 13, caractérisé en ce que la pression de tuyères est réduite par réduction de la vitesse de rotation du ou des ventilateurs alimentant les champs de tuyères (2, 3).

**15.** Parcours à tuyères de projection de gaz sous forte convection selon l'une au moins des revendications 1 à 14, caractérisé en ce que la pression de gaz diminue d'une rampe de tuyères à l'autre dans la direction de traversée du produit plat, tant dans les rampes supérieures de tuyères (3b) que dans les rampes inférieures de tuyères (2a).

**16.** Parcours à tuyères de projection de gaz sous forte convection selon la revendication 15, caractérisé en ce que l'écoulement est étranglé individuellement à l'entrée dans les rampes de tuyères (2a, 3b).

**17.** Parcours à tuyères de projection de gaz sous forte convection selon l'une au moins des revendications 1 à 16, caractérisé en ce que lorsque le parcours à tuyères est utilisé pour la précontrainte thermique des vitres (7), chaque vitre (7) est arrêtée après sa pénétration dans le parcours de refroidissement, et elle est ensuite au moins une fois déplacée en va-et-vient sur une course qui représente un multiple de la moitié de l'entr'axe (T) des rouleaux.

**18.** Parcours à tuyères de projection de gaz sous forte convection selon la revendication 17, caractérisé en ce que la course du va-et-vient est différente dans au moins un déplacement en va-et-vient.

**19.** Parcours à tuyères de projection de gaz sous forte convection selon l'une des revendications 1 à 18, pour la précontrainte de vitres minces, caractérisé en ce que les rampes supérieures de tuyères (3b) sont montées sur un châssis (11) à pivotement commun autour d'un point de rotation (10) qui peut être ajusté verticalement au moyen des tiges filetées de déplacement (12) et d'un entraînement (13) des tiges filetées de déplacement, en ce que l'ensemble du champ supérieur de tuyères (3) peut être pivoté vers le haut autour du point de rotation (10) au moyen d'un cylindre pneumatique (14), en ce que le champ inférieur des tuyères (2) peut être pivoté au moyen d'un cylindre pneumatique (17) autour d'un point de rotation (15) ajustable en hauteur, et peut être repoussé au moyen du même cylindre (17) contre une butée (16) ajustable en hauteur.

**20.** Parcours à tuyères de projection de gaz sous forte convection selon la revendication 18, caractérisé en ce que sont prévus des enregistreurs de déplacement pour la détection du parcours ajustable en hauteur, et en ce que l'ajustement en hauteur s'effectue par des moteurs et par l'intermédiaire d'une régulation commandée par calculateur.

**21.** Parcours à tuyères de projection de gaz sous forte convection selon l'une des revendications 1 à 20, pour la précontrainte de vitres, caractérisé en ce que les rouleaux (1) pour le transport des vitres (7) sont dotés sur la totalité de leur périphérie de supports de vitres (7) qui ne constituent globalement que la plus petite partie de la surface d'enveloppe de chaque rouleau.

**22.** Parcours à tuyères de projection de gaz sous forte convection selon la revendication 21, caractérisé en ce que les supports sont constitués par des anneaux toriques en caoutchouc fluoré.

**23.** Parcours à tuyères de projection de gaz sous forte convection selon la revendication 21, caractérisé en ce que les supports sont constitués d'un matériau en fibres de silicate, en particulier d'un matériau en fibres de silicate de calcium, en association avec des liants appropriés.

Fig. 1

EP 0 440 113 B1

Fig. 2

EP 0 440 113 B1

Fig. 3

Fig. 4

Weg, Zeit – Diagramm

Fig. 5

Fig. 6